# EUROPEAN PATENT SPECIFICATION

(11) **EP 1 878 948 B1**
(45) Date of publication and mention of the grant of the patent: **02.12.2015**
(21) Application number: 07013034.9
(22) Date of filing: 03.07.2007
(51) Int. Cl.: F16H 55/56

(54) **Belt type continuously variable transmission, and method of manufacturing a sheave of the belt type continuously variable transmission**
Stufenlos veränderbares Riemengetriebe und Verfahren zur Herstellung einer Riemenscheibe für das stufenlos veränderbare Riemengetriebe
Transmission variable continue de type courroie, et procédé de fabrication d'une poulie avec une transmission variable continue de type courroie

(30) Priority: 27.12.2006 JP 2006351053; 12.07.2006 JP 2006191133
(43) Date of publication of application: 16.01.2008
(73) Proprietor: Yamaha Hatsudoki Kabushiki Kaisha, Iwata-shi, Shizuoka 438-8501 (JP)
(72) Inventor: Ishida, Yousuke, Iwata-shi Shizuoka-ken 438-8501 (JP); Oishi, Akifumi, Iwata-shi Shizuoka-ken 438-8501 (JP); Murayama, Takuji, Iwata-shi Shizuoka-ken 438-8501 (JP)
(74) Representative: Grünecker Patent- und Rechtsanwälte PartG mbB

(56) References cited:
- EP-A- 0 997 670
- EP-A- 1 605 187
- JP-A- 2001 343 056
- JP-A- 2002 139 114
- JP-A- 2005 264 990
- US-A1- 2005 090 340
- US-A1- 2005 221 938

## Description

The present invention relates to a belt type continuously variable transmission, a straddle type vehicle provided with the belt type continuously variable transmission, and a method of manufacturing a sheave of the belt type continuously variable transmission.

Conventionally, there is known a straddle type vehicle provided with a belt type continuously variable transmission. A belt type continuously variable transmission comprises a primary sheave, to which a driving force from an engine is transmitted, and a secondary sheave, to which a driving force is transmitted through a V-belt from the primary sheave. In the belt type continuously variable transmission, a ratio of a diameter, at which a belt is wound round the primary sheave, and a diameter, at which the belt is wound round the secondary sheave, is varied whereby a reduction ratio is varied.

Belt type continuously variable transmissions are usually used in that environment (referred below to as dry environment), in which oil, moisture content, etc. do not enter. Here, in order to favorably transmit a driving force, a frictional force of a certain measure is needed between a sheave and a V-belt. On the other hand, however, when a V-belt is observed locally, states of contact/non-contact are switched over between a V-belt and a sheave as the V-belt runs, so that a lubricating ability of a certain measure is needed between the sheave and the V-belt. This is because with no lubricating ability, heat is generated due to friction between the V-belt and the sheave.

Here, it is thought that a lubricating ability between a sheave and a V-belt is preserved mainly by powder (abrasion powder) generated from the V-belt. That is, abrasion powder generated by contact with a sheave is held on a sheave surface (portion of the sheave in contact with the V-belt) whereby the sheave and the V-belt slide relative to each other while maintaining a frictional force of a certain measure. When a sheave surface is smooth, however, the abrasion powder cannot be suitably held on the sheave surface. If so, it becomes difficult to preserve a lubricating ability favorably between the sheave and the V-belt. Accordingly, irregularities are needed on the sheave surface to hold the abrasion powder.

On the other hand, when irregularities are present on a sheave surface, the irregularities make a V-belt liable to abrade. Therefore, when irregularities are made excessively large in magnitude, a V-belt becomes short in service life. Accordingly, magnitudes of irregularities on a sheave surface are limited in a predetermined range.

The following Patent Document 1 provides a description to the effect that in a belt type continuously variable transmission provided with a V-belt, that portion of which is in contact with a sheave surface, being formed from a resin, an abrasion loss of the V-belt is reduced by making surface roughness of the sheave surface Ra 0.5 to 3.0 µm.
Patent Document 1: Patent Gazette No. 3609754

However, it has been found as results of research made by the inventors of the present application that even when surface roughness of a sheave surface is In the predetermined range (Ra 0.5 to 3.0 µm) described above, an abrasion loss of a V-belt cannot necessarily be reduced. That is, it has been found that even when surface roughness of a sheave surface is in the predetermined range, a certain V-belt is small in abrasion loss and another V-belt is large in abrasion loss.

EP-A-1605187 **according to the preamble of claim 1 discloses a belt-type CVT comprising a primary sheave, a secondary sheave and a belt wound around the primary sheave and the secondary sheave. The belt Includes a plurality of resin blocks and coupling members. Grooves are provided on the primary sheave formed on the contact surface with the belt to retain carbon powder therein.**

It is the object of the present invention to give a preferred Index for reduction In abrasion loss of a V-belt In a belt type continuously variable transmission provided with a V-belt, that portion of which is in contact with a sheave surface, being formed from a resin, thus achieving making the belt type continuously variable transmission long in service life.

This object is solved by the features of claims 1 and 10, respectively.

Further, preferably one spiral groove or several spiral or concentric grooves may be formed about an axis of the respective sheave.

Still further, preferably the pitch of the groove or the pitch of the grooves Is uniform In a predetermined range in the radial direction.

Yet further still, the groove pitch Is changed once or several times or alternately or Irregularly in other ranges than the predetermined range In the radial direction than the predetermined range.

Still further, preferably the groove or the grooves on the sheave surface are formed by means of turning process.

Yet further still, preferably a material of that sheave, on which the groove or the grooves are formed, is aluminum, stainless steel, or iron.

Preferably, a distance between an axis of the primary sheave and an axis of the secondary sheave is not more than twice a diameter of the secondary sheave.

There is further provided a straddle type vehicle comprising the belt type continuously variable transmission according to one of the above embodiments.

Preferably, a front wheel and a rear wheel, wherein both the primary sheave and the secondary sheave are arranged between an axis of the front wheel and an axis of the rear wheel in a longitudinal direction of the vehicle.

Further, preferably the method comprises the further step of applying a plating to that sheave surface, on which the grooves are formed.

In the following, the present invention is explained in greater detail with respect to several embodiments thereof in conjunction with the accompanying drawings, wherein:
- Fig. 1: is a cross sectional view conceptually illustrating, in a radial direction of a sheave, a state, in which a sheave surface and a V-belt contact with each other,
- Figs. 2(a) and 2(b): are tables representative of data of specimens used in tests,
- Fig. 3: is a graph representative of test results with respect to travel distance and belt abrasion loss,
- Fig. 4: is a graph representative of the relationship between groove pitch and surface hardness of a sheave surface,
- Fig. 5: is a side view showing a motorcycle according to an embodiment,
- Fig. 6: is a plan view showing the positional relationship among a body frame, leg shields, an engine unit, etc.,
- Fig. 7: is a right side view showing the engine unit,
- Fig. 8: is a left side view showing the engine unit,
- Fig. 9: is a cross sectional view showing a state, in which the engine unit is mounted,
- Fig. 10: is a cross sectional view showing an internal structure of the engine unit,
- Fig. 11: is a cross sectional view showing a part of the internal structure of the engine unit,
- Fig. 12: is a view showing a sheave surface of a primary sheave, Fig. 12(a) being a front view, and Fig. 12(b) being a cross sectional view in a radial direction,
- Fig. 13: is a view showing a sheave surface of a secondary sheave, Fig. 13(a) being a front view, and Fig. 13(b) being a cross sectional view in a radial direction,
- Fig. 14: is a front view showing a sheave surface according to a modification,
- Fig. 15: is a side view showing a V-belt,
- Fig. 16: is a cross sectional view taken along the line XVI-XVI in Fig. 15,
- Fig. 17: is a view showing a state, in which a V-belt is wound, Fig. 17(a) being a view at the time of Low, and Fig. 17(b) being a view at the time of Top,
- Fig. 18: is a cross sectional view showing a sheave surface portion, according to a modification, in a radial direction,
- Fig. 19: is a cross sectional view showing a sheave surface portion, according to a further modification, in a radial direction,
- Fig. 20: is a cross sectional view showing a sheave surface portion, according to a further modification, in a radial direction,
- Fig. 21: is a front view showing a sheave surface according to a modification, and
- Fig. 22: is a front view showing a sheave surface according to a further modification.

### Description of Reference Numerals and Signs:

10: motorcycle (straddle type vehicle)
19: front wheel
26: rear wheel
28: engine unit
29: engine
30: belt type continuously variable transmission
71: primary sheave
72: secondary sheave
73: V-belt
73a: resin block
91: groove
FIG. 2
Specimen No.
Surface Material
Hard Chrome Plating
SCM420 Carburizing
Processing Pitch (mm)
Hardness (Hv)
Abraded State
FIG. 3
Belt Abrasion Loss (mm)
Travel Distance (km)
FIG. 4
Hardness (Hv)
Groove Pitch (mm)
FIGs. 18, 19, and 20
Radial Direction

First, prior to explaining an embodiment, an explanation is given to the circumstances, in which the present teaching has been thought of.

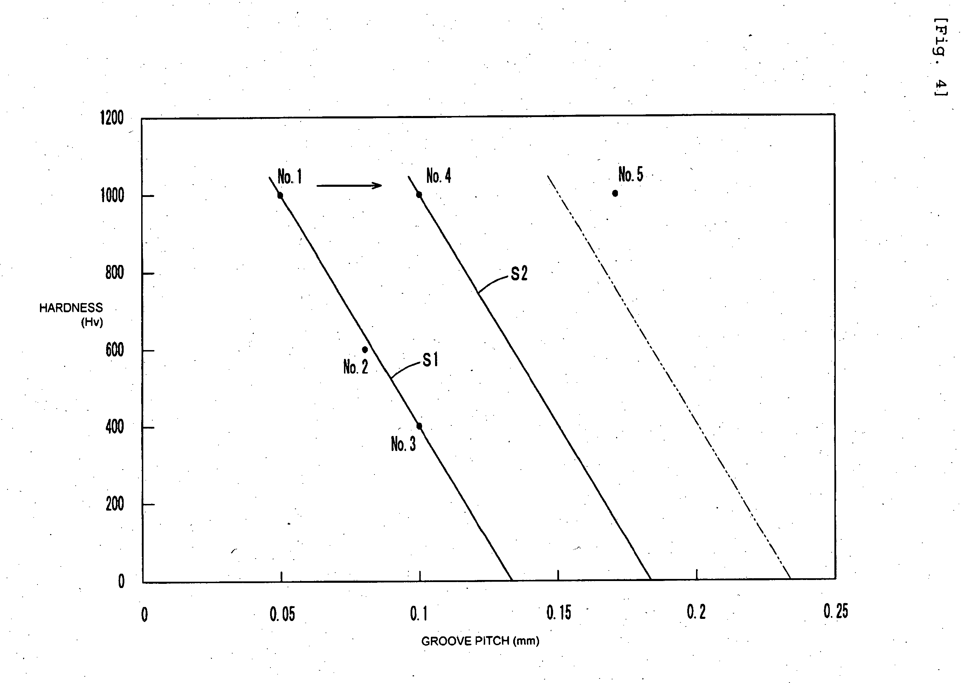

As described above, the inventors of the present application have thought that two parameters, that is, groove pitch and surface hardness of a sheave surface are important to abrasion of a V-belt in a belt type continuously variable transmission (referred below to as CVT). Here, as a groove pitch increases, contact pressure increases and a V-belt becomes liable to abrade while as a groove pitch decreases, contact pressure decreases and a V-belt becomes hard to abrade. On the other hand, while surface hardness of a sheave surface increases, a V-belt becomes liable to abrade while as surface hardness decreases, a V-belt becomes hard to abrade. Hereupon, the inventors of the present application have thought that a characteristic representative of that degree, to which a V-belt is susceptible of abrasion, can be approximately represented by a rightward lowering, straight line in a graph, in which groove pitch is indicated on an axis of abscissa and surface hardness is indicated on an axis of ordinates (see Fig. 4). That is, it is thought that when being present on the straight line, a V-belt is substantially constant in an abraded state.

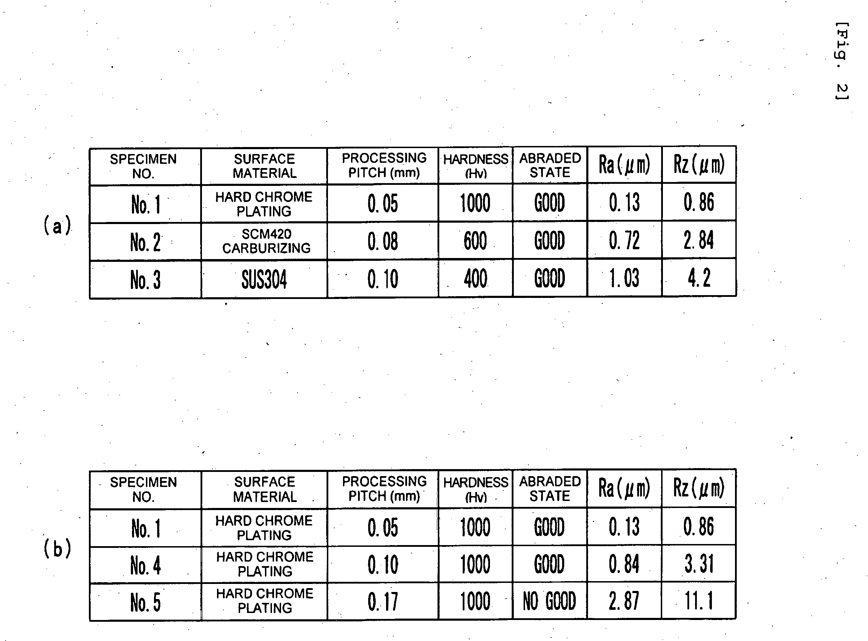

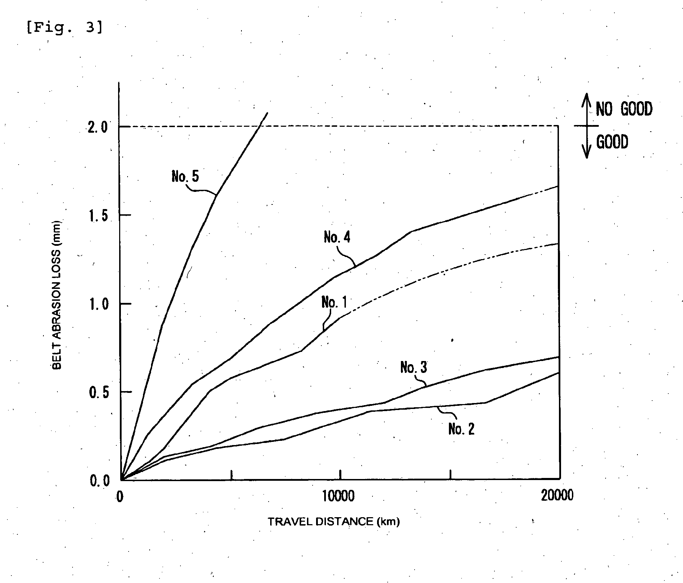

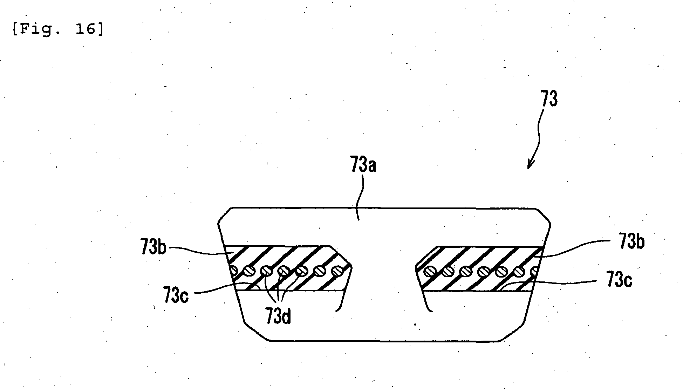

The inventors of the present application have performed tests to examine a state of abrasion of a V-belt in CVT. Figs. 2(a) and 2(b) show data of specimens used in the tests. Fig. 3 is a graph illustrating results of the tests and showing a belt abrasion loss (strictly, abrasion loss in a width direction (left and right direction in Fig. 16) of a V-belt) versus travel distance.

By the way, it is usually thought in motorcycles that there is caused no practical problem provided that a belt abrasion loss is 2 mm or less at a point of time when travel distance is 20000 km. In addition, when a V-belt abrades, CVT generates an error in speed change ratio but such error can be absorbed by making use of a known speed change ratio correction technique (see, for example, pamphlets of International Publication WO2004/044457A1, International Publication WO2005/090828A1, International Publication WO2006/009014A1, etc).

Hereupon, in the case where a belt abrasion loss is 2 mm or less when travel distance is 20000 km, it is determined that a state of a V-belt is favorable. Figs. 2(a) and 2(b) show results of determination. "GOOD" in a column of "ABRADED STATE" in Figs. 2(a) and 2(b) indicates that a belt abrasion loss is 2 mm or less and a state of a V-belt is favorable, and "NO GOOD" indicates that a belt abrasion loss exceeds 2 mm and a state of a V-belt is not favorable. In addition, tests on some specimens were terminated at a point of time when travel distance was short of 20000 km. A two-dot chain line in Fig. 3 is a characteristic curve predicted from previous characteristics.

Fig. 4 is a graph, in which the relationship between groove pitch and surface hardness for Specimens Nos. 1 to 5 are plotted. As described above, that degree, to which a V-belt is susceptible of abrasion, can be approximately represented by a rightward lowering, straight line. As the result of the tests, Specimen No. 1 was favorable in belt state. Accordingly, at least a rightward lowering, straight line passing through a point of Specimen No. 1 can be drawn as a boundary line, on which abrasion of a V-belt is permissible.

Here, inclination of the straight line is problematic. Referring to Fig. 3, however, Specimens Nos. 2 and 3 are favorable in belt state and besides Specimens Nos. 2 and 3 are more favorable in belt state than Specimen No. 1. In Fig. 4, since it is thought that as it goes leftwardly of the straight line, a belt state becomes favorable, it is expected that the boundary line passing through the point of Specimen No. 1 passes on the right of respective points of Specimens Nos. 2 and 3. Therefore, it is estimated that in the case where a straight line S1 passing through respective points of Specimens Nos. 1 and 3 is tentatively drawn, a belt state is favorable in at least a region below the straight line S1.

Subsequently, Specimens Nos. 1, 4, and 5, which are equal to one another in surface hardness, will be examined (see Fig. 2(b)). As seen from Fig. 3, a belt state worsens in the order of Specimens Nos. 1, 4, and 5 but belt state in Specimens Nos. 1 and 4 are in a favorable range. Therefore, it can be thought in Fig. 4 that the straight line S1 is shifted rightward and it is thought that a boundary line, on which abrasion of a V-belt is permissible, passes between points of Specimens Nos. 4 and 5 (see an imaginary line in Fig. 4). Accordingly, in the case where a straight line S2 in parallel to the straight line S1 and passing through a point of Specimen No. 4 is drawn, it is estimated that a belt state is favorable in at least a region below the straight line S2.

The straight line S2 is represented by P = -0.08K×10⁻³ + 0.18 where P(mm) indicates groove pitch and K(Hv) indicates surface hardness of a sheave surface. Therefore, a CVT is designed so as to meet the equation P ≤ -0.08K×10⁻³ + 0.18.

Also, as described above, it is thought that a lubricating ability between a sheave and a V-belt is preserved mainly by powder (abrasion powder) generated from a V-belt. From the viewpoint of favorably holding abrasion powder on a sheave surface, it is preferable to maintain a groove depth and a groove pitch on a sheave surface in a predetermined range. Here, an arithmetical mean roughness Ra and a ten-point mean roughness Rz are known as a physical quantity representative of a groove depth.

In case of using the arithmetical mean roughness Ra, even when irregularities being large in magnitude are present locally, whole measured values are less influenced by the irregularities, so that it is possible to obtain stable results as a whole. In the case where excessive irregularities are present here and there on a sheave surface, however, the irregularities promote abrasion of a V-belt and influences thereof become relatively large. Therefore, with the arithmetical mean roughness Ra, it is difficult to correctly evaluate such influences. On the other hand, in case of using the ten-point mean roughness Rz, when irregularities being large in magnitude are present locally, influences thereof are taken into consideration to some extent. Therefore, in taking account of abrasion of a V-belt, evaluation adapted to actual circumstances can be done by using the ten-point mean roughness Rz rather than the arithmetical mean roughness Ra.

Hereupon, a ten-point mean roughness Rz of a sheave surface, on which the grooves are formed, is according to the invention, 0.5 µm ≤ Rz ≤ 10 µm.

The embodiment will be described in detail with reference to the drawings.

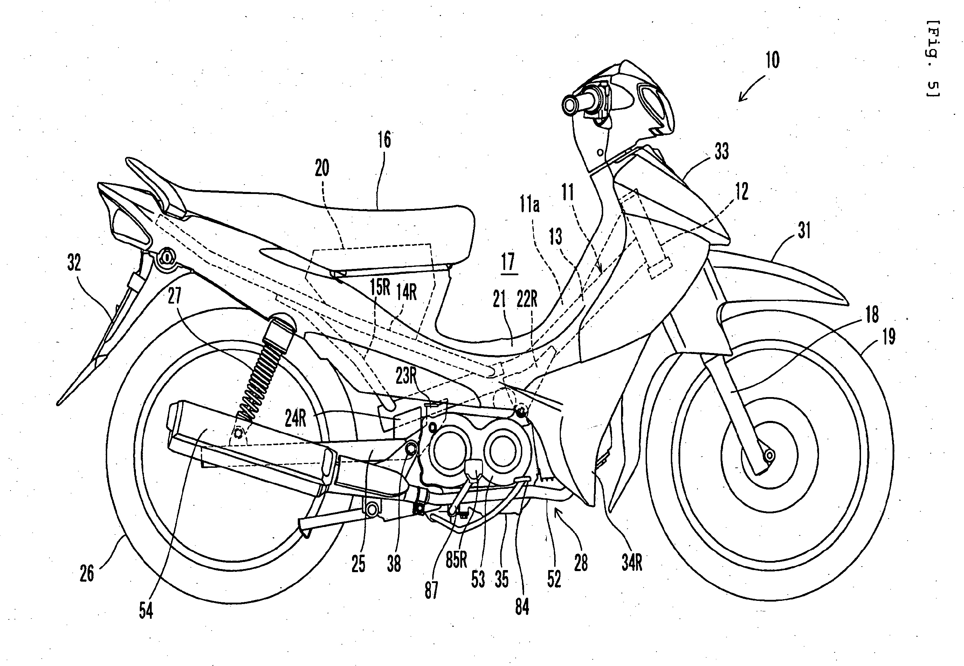

As shown in Fig. 5, a straddle type vehicle according to the embodiment is a motorcycle 10. The motorcycle 10 comprises a body frame 11, which constitutes a framework, and a seat 16, on which a rider is seated. The motorcycle 10 comprises a so-called moped type motorcycle. However, the straddle type vehicle according to the present teaching may comprise a motorcycle (for example, motorcycle type and scooter type motorcycles, etc.) other than a moped type motorcycle, or may comprise a straddle type vehicle (for example, ATV, etc.) other than a motorcycle.

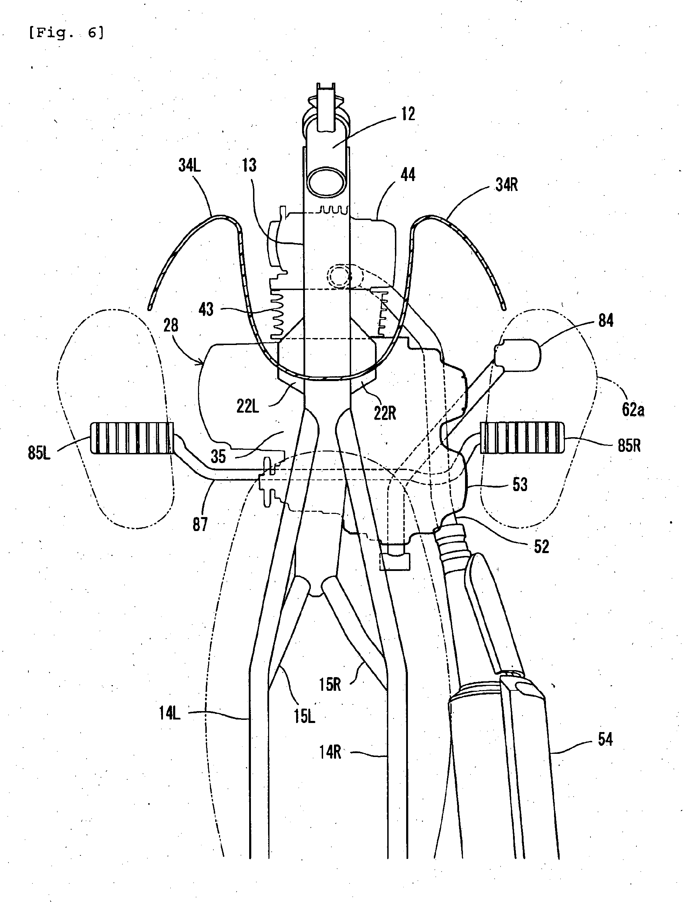

In the following descriptions, it is assumed that front and rear, and left and right directions are ones as seen from a crew seated on the seat 16. The body frame 11 comprises a steering head pipe 12, a single main frame 13 extending rearwardly and obliquely downwardly of the steering head pipe 12, left and right seat rails 14L (see Fig. 6), 14R extending rearwardly and obliquely upwardly of an intermediate portion of the main frame 13, and left and right seat pillar tubes 15L, 15R connected to a rear end of the main frame 13 and intermediate portions of the seat rails 14L, 14R.

Upper and left and right sides of the body frame 11 are covered by a body cover 21. A space 17, which is dented downwardly and concave-shaped as viewed in side view, is compartmented upwardly of the body cover 21 and forwardly of the seat 16. Also, a center tunnel 11 a, which defines a passage for the main frame 13, is compartmented below the body cover 21.

A front wheel 19 is supported on the steering head pipe 12 through a front fork 18. A fuel tank 20 and the seat 16 are supported on the seat rails 14L, 14R. The seat 16 is extended toward rear ends of the seat rails 14L, 14R from above the fuel tank 20. The fuel tank 20 is arranged above front halves of the seat rails 14L, 14R and covered by the body cover 21 and the seat 16.

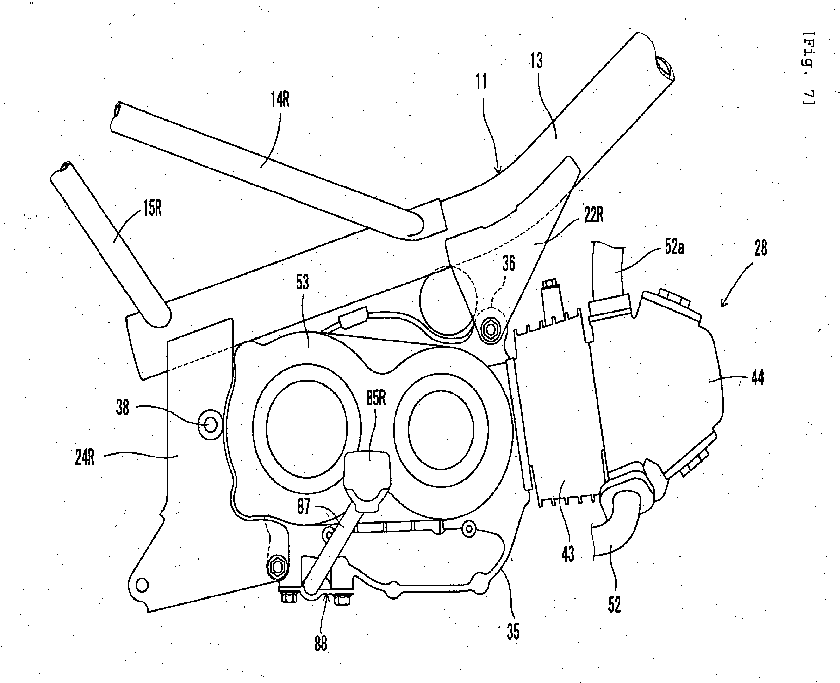

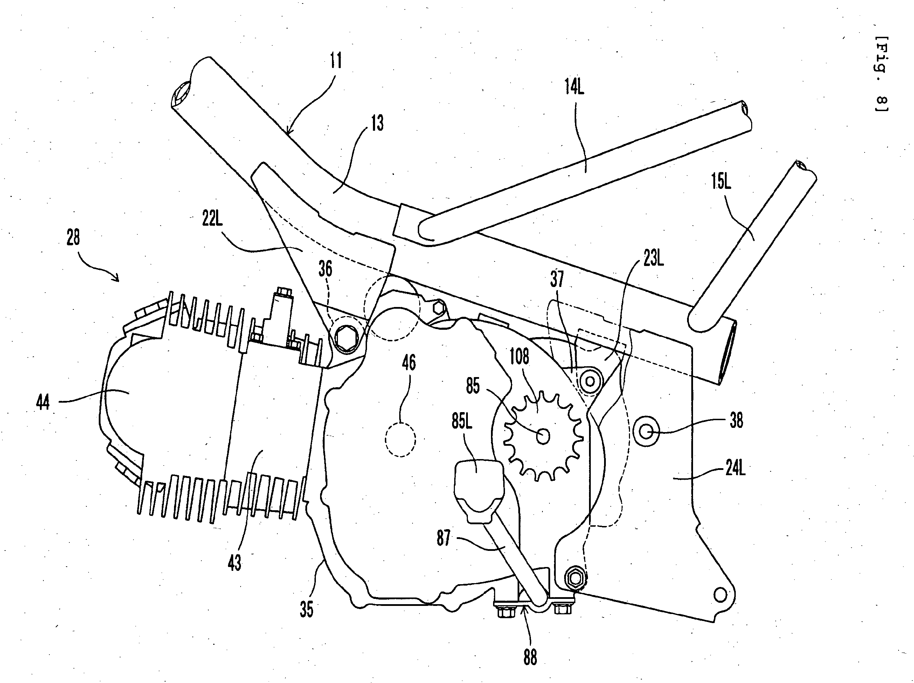

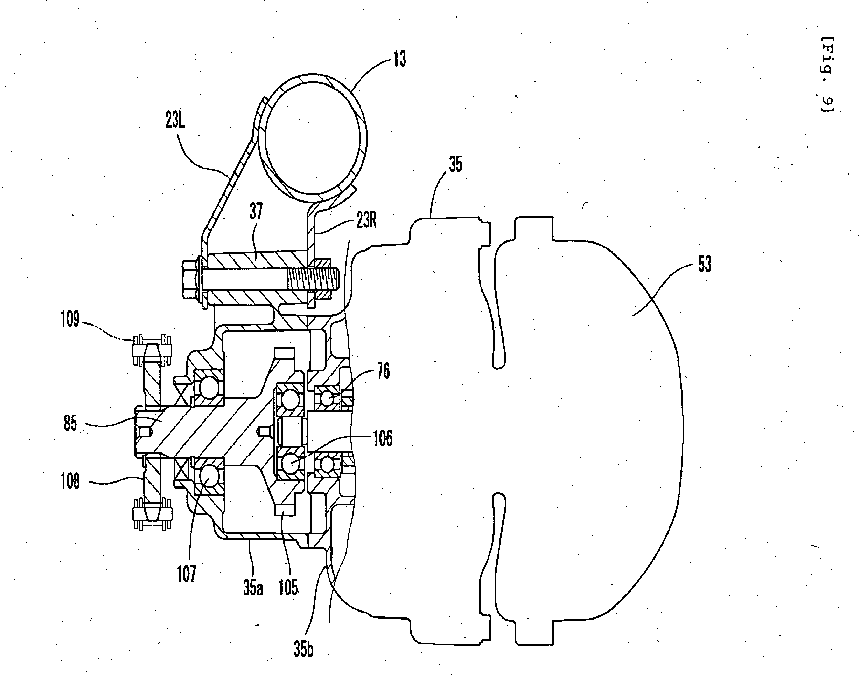

A pair of first left and right engine brackets 22L, 22R (see Figs. 7 and 8) are provided on the intermediate portion of the main frame 13 to project downward. Provided on the rear end of the main frame 13 are pairs of second left and right engine brackets 23L, 23R (see Fig. 9) and rear arm brackets 24L, 24R (see Figs. 7 and 8).

The rear arm brackets 24L, 24R project downward from the rear end of the main frame 13. A pivot shaft 38 is provided on the rear arm brackets 24L, 24R and a front end of a rear arm 25 is supported on the pivot shaft 38 to be able to swing as shown in Fig. 5. A rear wheel 26 is supported on a rear end of the rear arm 25. A rear half of the rear arm 25 is suspended from the body frame 11 through a cushioning unit 27.

As shown in Fig. 9, the second engine brackets 23L, 23R project downward from the rear end of the main frame 13. The second left and right engine brackets 23L, 23R are opposed to each other with a spacing in a vehicle width direction.

As shown in Fig. 5, supported on the body frame 11 is an engine unit 28 that drives the rear wheel 26. Specifically, the engine unit 28 comprises a crank case 35, a cylinder 43, and a cylinder head 44 as shown in Fig. 8. The crank case 35 comprises first and second engine mounts 36, 37. The first engine mount 36 projects upward from an upper side of a front end of the crank case 35 to be supported on the first engine brackets 22L, 22R. The second engine mount 37 projects rearward and obliquely upward from an upper side of a rear end of the crank case 35 to be supported on the second engine brackets 23L, 23R (also, see Fig. 9). Therefore, the crank case 35 is supported in a state of being suspended from the main frame 13.

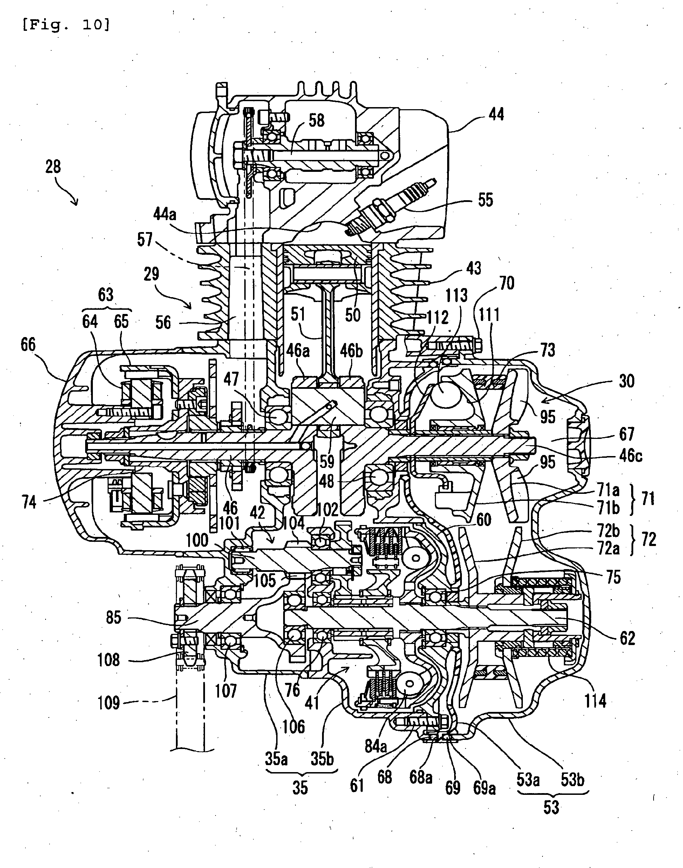

As described later in detail, the engine unit 28 comprises an engine 29 and a belt type continuously variable transmission (CVT) 30 (see Fig. 10). While the engine 29 is in no way limited in type, it comprises a four-stroke single cylinder engine in the embodiment.

As shown in Fig. 5, the motorcycle 10 comprises a front fender 31, which covers upper and rear portions of the front wheel 19, and a rear fender 32, which covers a rearward and obliquely upward portion of the rear wheel 26. Also, the motorcycle 10 comprises a front cowl 33, and left and right leg shields 34L, 34R (see Fig. 6) in addition to the body cover 21 described above.

As shown in Fig. 6, foot rests 85L, 85R made of rubber or the like are arranged on the left and the right of the engine unit 28. The left and right foot rests 85L, 85R are supported on the crank case 35 of the engine unit 28 through a metallic connecting rod 87 and a mount plate 88 (see Figs. 7 and 8) fixed to the connecting rod 87.

As shown in Figs. 5 and 6, a brake pedal 84 is provided forwardly of the right foot rest 85R. The brake pedal 84 passes below a transmission casing 53 to project rightward and obliquely forward to extend forward and obliquely upward on the right of the transmission casing 53. As shown in Fig. 6, a driver's right foot 62a adjoins the transmission casing 53 in the vehicle width direction when the motorcycle 10 travels.

Subsequently, an explanation will be given to an internal structure of the engine unit 28. As shown in Fig. 10, the engine unit 28 comprises the engine 29, the CVT 30, a centrifugal clutch 41, and a speed reducer 42.

The engine 29 comprises the crank case 35, the cylinder 43 connected to the crank case 35, and the cylinder head 44 connected to the cylinder 43. The crankcase 35 comprises two split case blocks, that is, a first case block 35a positioned on the left and a second case block 35b positioned on the right. The first case block 35a and the second case block 35b are caused to butt against each other in the vehicle width direction.

A crank shaft 46 is accommodated in the crank case 35. The crank shaft 46 is extended in the vehicle width direction and arranged horizontally. The crank shaft 46 is supported on the first case block 35a with a bearing 47 therebetween and supported on the second case block 35b with a bearing 48 therebetween.

A piston 50 is inserted slidably into the cylinder 43. An end of a connecting rod 51 is connected to the piston 50. A crank pin 59 is provided between a left crank arm 46a and a right crank arm 46b of the crank shaft 46. The other end of the connecting rod 51 is connected to the crank pin 59.

Formed on the cylinder head 44 are a recess 44a, an intake port and an exhaust port, which are not shown but communicated to the recess 44a. An ignition plug 55 is inserted into the recess 44a of the cylinder head 44. As shown in Fig. 7, an intake pipe 52a is connected to the intake port and an exhaust pipe 52 is connected to the exhaust port. As shown in Figs. 5 and 6, the exhaust pipe 52 is extended rearwardly rightward and obliquely downward from the cylinder head 44 and passes below the transmission casing 53 of the engine unit 28 to be extended further rearward to be connected to a muffler 54 arranged on the right side of the rear wheel 26.

As shown in Fig. 10, formed on a left side in the cylinder 43 is a cam chain chamber 56, which connects between an interior of the crank case 35 and an interior of the cylinder head 44. A timing chain 57 is arranged in the cam chain chamber 56. The timing chain 57 is wound around the crank shaft 46 and a cam shaft 58. The cam shaft 58 rotates upon rotation of the crank shaft 46 to open and close an intake valve and an exhaust valve, which are not shown.

A generator casing 66 is detachably mounted to a left side of a front half of the first case block 35a to accommodate therein a generator 63. The transmission casing 53 is mounted to a right side of the second case block 35b to accommodate therein the CVT 30.

An opening is formed on a right side of a rear half of the second case block 35b, the opening being closed by a clutch cover 60. The clutch cover 60 is detachably fixed to the second case block 35b by a bolt 61.

The transmission casing 53 is formed independently of the crank case 35 and comprises an inner casing 53a, which covers an inside (left) of the CVT 30 in the vehicle width direction, and an outer casing 53b, which covers an outside (right) of the CVT 30 in the vehicle width direction. The inner casing 53a is mounted to a right side of the crank case 35 and the outer casing 53b is mounted to a right side of the inner casing 53a. A belt chamber 67 is formed in the inner casing 53a and the outer casing 53b to accommodate therein the CVT 30.

As shown in Fig. 10, a right end of the crank shaft 46 extends through the second case block 35b and the inner casing 53a to be extended to the belt chamber 67. A primary sheave 71 of the CVT 30 is fitted into the right end of the crank shaft 46. Therefore, the primary sheave 71 rotates upon rotation of the crank shaft 46. A right portion (strictly, a portion on the right of the bearing 48) of the crank shaft 46 is formed with a primary sheave shaft 46c.

On the other hand, a left end of the crank shaft 46 extends through the first case block 35a to be extended into the generator casing 66. The generator 63 is mounted to the left end of the crank shaft 46. The generator 63 comprises a stator 64 and a rotor 65 opposed to the stator 64. The rotor 65 is fixed to a sleeve 74 that rotates with the crank shaft 46. The stator 64 is fixed to the generator casing 66.

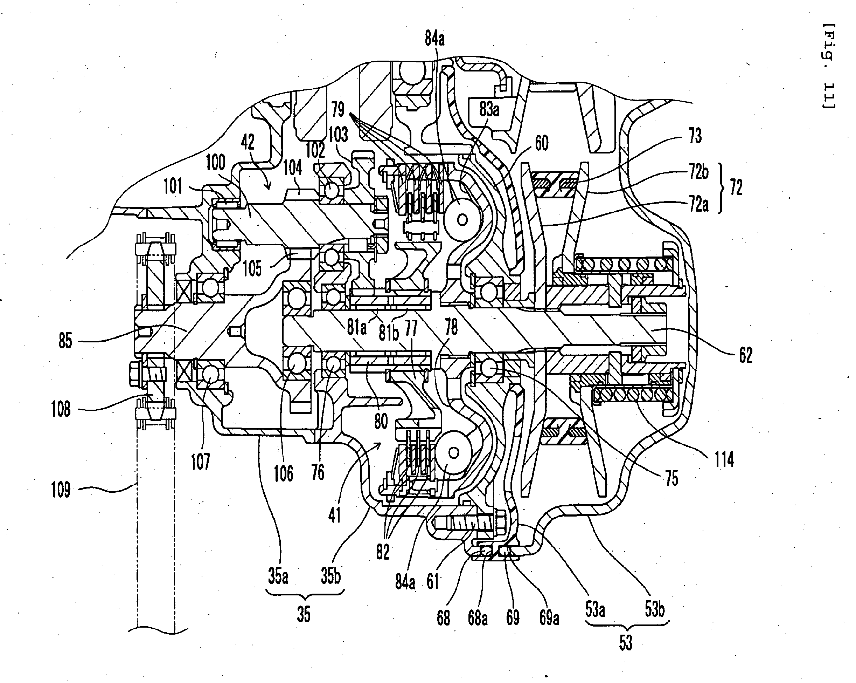

A secondary sheave shaft 62 is arranged in the rear half of the crank case 35 to be made in parallel to the crank shaft 46. As shown in Fig. 11, a central portion of the secondary sheave shaft 62 is supported on the clutch cover 60 with a bearing 75 therebetween. Also, a left portion of the secondary sheave shaft 62 is supported on a left end of the second case block 35b with a bearing 76 therebetween.

A right end of the secondary sheave shaft 62 extends through the second case block 35b and the clutch cover 60 to be extended to the belt chamber 67. A secondary sheave 72 of the CVT 30 is connected to the right end of the secondary sheave shaft 62.

As shown in Fig. 10, the CVT 30 comprises the primary sheave 71, the secondary sheave 72, and a V-belt 73 wound around the primary sheave 71 and the secondary sheave 72. As described above, the primary sheave 71 is mounted to a right side of the crank shaft 46. The secondary sheave 72 is connected to a right side of the secondary sheave shaft 62.

The primary sheave 71 comprises a stationary sheave half 71 a positioned outward in the vehicle width direction and a movable sheave half 71 b positioned inward in the vehicle width direction and opposed to the stationary sheave half 71 a. The stationary sheave half 71 a is fixed to a right end of the primary sheave shaft 46c to rotate with the primary sheave shaft 46c. The movable sheave half 71 b is arranged on the left of the stationary sheave half 71 a and mounted slidably to the primary sheave shaft 46c. Accordingly, the movable sheave half 71 b rotates with the primary sheave shaft 46c and is slidable axially of the primary sheave shaft 46c. A belt groove is formed between the stationary sheave half 71 a and the movable sheave half 71 b.

A cooling fan 95 is provided on an outer side (right side in Fig. 10) of the stationary sheave half 71 a. A cam surface 111 is formed on a left portion of the movable sheave half 71 b and a cam plate 112 is arranged on the left of the cam surface 111. A roller weight 113 is arranged between the cam surface 111 of the movable sheave half 71 b and the cam plate 112.

The secondary sheave 72 comprises a stationary sheave half 72a positioned inward in the vehicle width direction and a movable sheave half 72b positioned outward in the vehicle width direction and opposed to the stationary sheave half 72a. The movable sheave half 72b is mounted to the right end of the secondary sheave shaft 62. The movable sheave half 72b rotates together with the secondary sheave shaft 62 and is slidable axially of the secondary sheave shaft 62. A compression spring 114 is provided on the right end of the secondary sheave shaft 62 and the movable sheave half 72b is biased leftward by the compression spring 114. An axial portion of the stationary sheave half 72a is in the form of a cylindrical-shaped slide collar and spline-fitted onto the secondary sheave shaft 62.

A reduction ratio in the CVT 30 is decided by the magnitude correlation between a force, with which the roller weight 113 pushes the movable sheave half 71 b of the primary sheave 71 rightward, and a force, with which the compression spring 114 pushes the movable sheave half 72b of the secondary sheave 72 leftward.

That is, when the primary sheave shaft 46c is increased in rotational frequency, the roller weight 113 is exerted by a centrifugal force to move radially outward to push the movable sheave half 71 b rightward. Then the movable sheave half 71 b is moved rightward, so that the primary sheave 71 is increased in belt wound diameter. In keeping with this, the secondary sheave 72 is decreased in belt wound diameter, so that the movable sheave half 72b of the secondary sheave 72 is moved rightward against the bias of the compression spring 114. Consequently, the V-belt 73 on the primary sheave 71 is increased in wound diameter while the secondary sheave 72 is decreased in wound diameter, so that the reduction ratio decreases.

On the other hand, when the primary sheave shaft 46c is decreased in rotational frequency, a centrifugal force on the roller weight 113 decreases, so that the roller weight 113 is moved radially inward along the cam surface 111 of the movable sheave half 71 b and the cam plate 112. Therefore, a force, with which the roller weight 113 pushes the movable sheave half 71 b rightward, decreases. Then the bias of the compression spring 114 exceeds the force relatively, so that the movable sheave half 72b of the secondary sheave 72 is moved leftward and the movable sheave half 71 b of the primary sheave 71 is also moved leftward correspondingly. Consequently, the primary sheave 71 is decreased in belt wound diameter while the secondary sheave 72 is increased in belt wound diameter, so that the reduction ratio increases.

Materials for the stationary sheave half 71a and the movable sheave half 71b of the primary sheave 71, and materials for the stationary sheave half 72a and the movable sheave half 72b of the secondary sheave 72 are not especially limitative. It is possible to preferably make use of metal such as aluminum, iron, stainless steel, etc. as materials for the members. Also, surfaces of the sheave half 71 a, etc. may be of course subjected to surface treatment such as chrome plating, etc.

According to the embodiment, the stationary sheave half 71 a and the movable sheave half 71 b of the primary sheave 71 are formed from aluminum or an alloy partially containing aluminum. Hard chrome plating is applied to sheave surfaces (surfaces in contact with the V-belt 73) of the stationary sheave half 71 a and the movable sheave half 71 b of the primary sheave 71. Consequently, the stationary sheave half 71 a and the movable sheave half 71 b have a sheave surface hardness of about 1000 Hv.

The stationary sheave half 72a and the movable sheave half 72b of the secondary sheave 72 are formed from stainless steel (SUS304). In addition, sheave surfaces of the stationary sheave half 72a and the movable sheave half 72b of the secondary sheave 72 are not subjected to chrome plating. Consequently, the stationary sheave half 72a and the movable sheave half 72b have a sheave surface hardness of about 400 Hv.

In this manner, according to the embodiment, the secondary sheave 72 is lower in sheave surface hardness than the primary sheave 71. However, the primary sheave 71 and the secondary sheave 72 may be the same in sheave surface hardness.

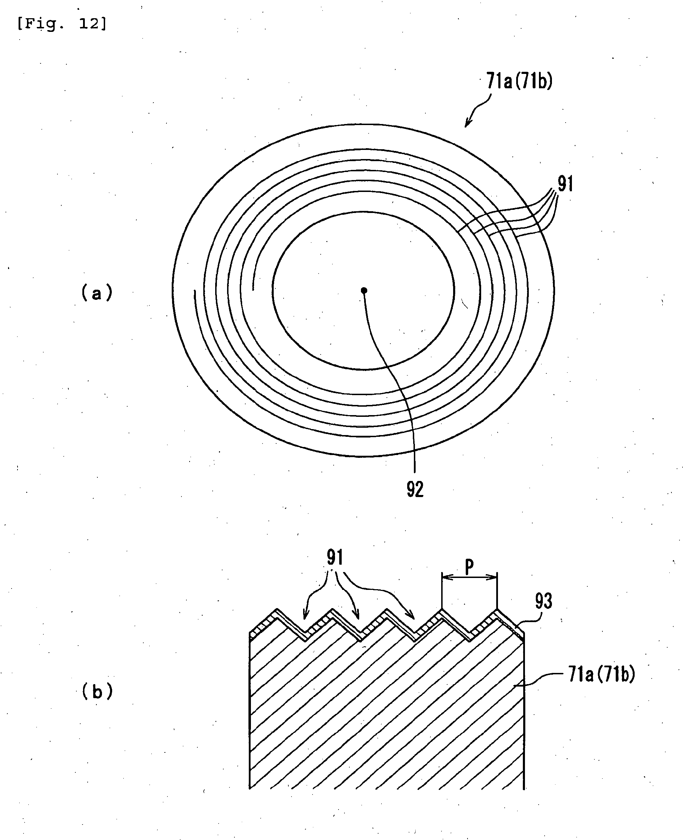

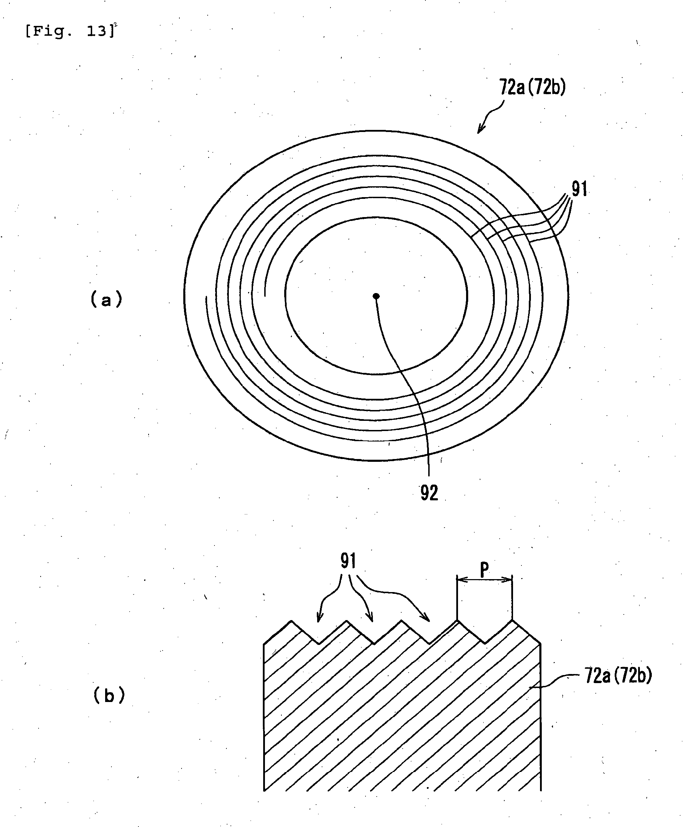

As shown in Figs. 12 and 13, according to the embodiment, spiral-shaped grooves 91 are formed on sheave surfaces (more specifically, surfaces of the stationary sheave half 71a, the movable sheave half 71b, the stationary sheave half 72a, and the movable sheave half 72b in contact with the V-belt 73) of the primary sheave 71 and the secondary sheave 72.

Specifically, as shown in Figs. 12(a) and 12(b), a plurality of grooves 91 aligned at predetermined pitch P in a diametrical direction are formed on sheave surfaces of the stationary sheave half 71 a and the movable sheave half 71 b of the primary sheave 71 by means of turning process. Also, as shown in Figs. 13(a) and 13(b), similar grooves 91 are formed on sheave surfaces of the stationary sheave half 72a and the movable sheave half 72b of the secondary sheave 72 by means of turning process.

The grooves 91 according to the embodiment are formed to be spiral about an axis 92 of the sheave halves 71a, 71b, 72a, 72b. As shown in Figs. 12(b) and 13(b), cross sections of the sheave halves 71 a, 71 b, 72a, 72b in a radial direction are formed by the grooves 91 to be concave and convex. As shown in Fig. 12(b), plating 93 is applied to sheave surfaces of the stationary sheave half 71 a and the movable sheave half 71 b of the primary sheave 71. According to the embodiment, the plating comprises chrome plating. That is, chrome plated layer 93 are formed on the sheave surfaces of the stationary sheave half 71 a and the movable sheave half 71 b. In this manner, according to the embodiment, in manufacture of the stationary sheave half 71 a and the movable sheave half 71 b, the grooves 91 are first formed on the sheave surfaces by means of turning process, and then plating is applied to the sheave surfaces.

By the way, grinding as well as turning process is also conceivable as a way to form a plurality of grooves on a sheave surface. However, turning process is further preferable as a way to form the grooves 91.

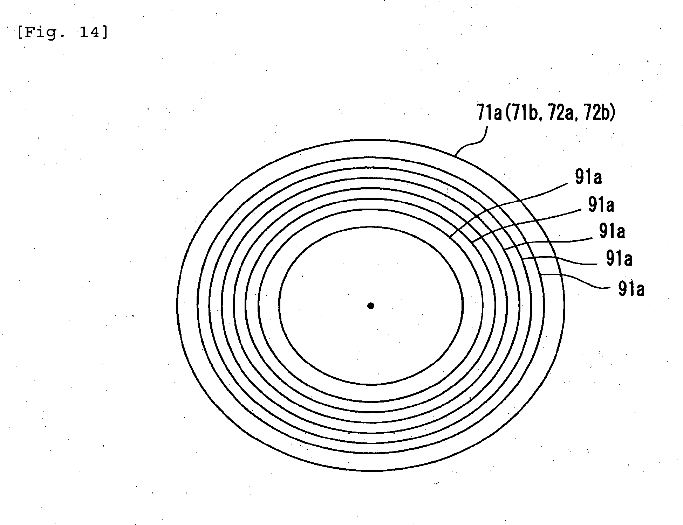

However, grooves on the sheave surfaces are not limited to the spiral grooves 91. As shown in, for example, Fig. 14, a plurality of concentric grooves 91 a centered on an axis of the sheaves may be formed on the sheave surfaces. With a view to holding abrasion powder suitably, it is preferred that cross sections of the sheave halves 71 a, 71 b, 72a, 72b in a radial direction be formed to be concave and convex by the grooves on the sheave surfaces.

Here, the pitch P(mm) is represented by P ≤ -0.08K×10⁻³ + 0.18 where K(Hv) indicates surface hardness of a sheave surface.

However, according to the invention the pitch P and the surface hardness K satisfy 0.05 ≤ P ≤ 0.1 and 400 ≤ K ≤ 1000. Of course, the pitch P and the surface hardness K may be the same as those of Specimens Nos. 1 to 4 shown in Figs. 2(a) and 2(b).

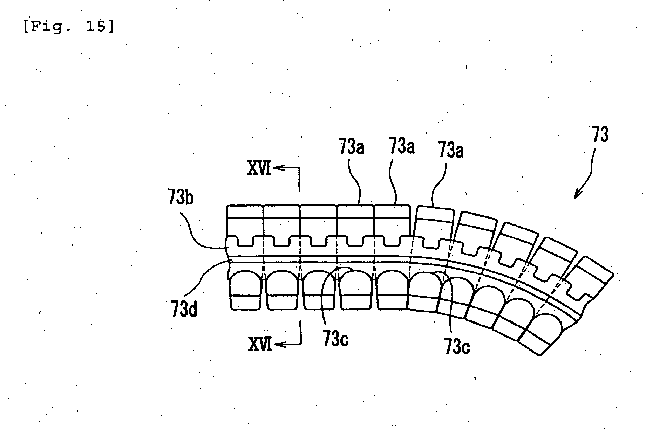

Subsequently, an explanation will be given to a structure of the V-belt 73. As shown in Figs. 15 and 16, the V-belt 73 comprises a plurality of resin blocks 73a arranged in one direction, and a pair of connecting bodies 73b connecting between the resin blocks 73a. As shown in Fig. 16, resin blocks 73a are formed to be substantially trapezoid-shaped so as to follow both belt grooves of the primary sheave 71 and the secondary sheave 72. Recesses 73c dented inward are formed on both left and right sides of the resin blocks 73a.

The connecting bodies 73b are formed to be endless. As shown in Fig. 15, the connecting bodies 73b are extended in a direction, in which the resin blocks 73a are aligned, and fitted into the recesses 73c of the respective resin blocks 73a. In this manner, the connecting bodies 73b are fitted into the recesses 73c of the resin blocks 73a whereby the plurality of resin blocks 73a are connected together through the connecting bodies 73b. The connecting bodies 73b are formed from rubber. As shown in Fig. 16, a plurality of lengths of core wire 73d for reinforcement are embedded in the rubber. Left and right sides of the resin blocks 73a and the connecting bodies 73b of the V-belt 73 constitute contact surfaces in contact with sheave surfaces of the primary sheave 71 and the secondary sheave 72.

In addition, with the V-belt according to the embodiment, at least a part of a contact portion thereof in contact with the sheave surfaces suffices to be formed from a resin, and the V-belt is not limited to the V-belt 73, in which the plurality of resin blocks 73a are connected by the connecting bodies 73b.

As shown in Fig. 10, a sealing groove 68a is formed on a left side of a peripheral edge of the inner casing 53a and a right side of a peripheral edge of the second case block 35b is fitted into the sealing groove 68a. In addition, an O-ring 68 is inserted between the inner casing 53a and the second case block 35b in the sealing groove 68a. Also, a sealing groove 69a is formed on a right side of the peripheral edge of the inner casing 53a and a peripheral edge of the outer casing 53b is fitted into the sealing groove 69a. An O-ring 69 is inserted between the inner casing 53a and the outer casing 53b in the sealing groove 69a. The outer casing 53b and the second case block 35b are clamped by bolts 70 in a state, in which the inner casing 53a is interposed therebetween.

As shown in Fig. 11, the centrifugal clutch 41 is mounted to a left portion of the secondary sheave shaft 62. The centrifugal clutch 41 comprises a wet multi-disc type clutch provided with a substantially cylindrical-shaped clutch housing 78 and a clutch boss 77. The clutch housing 78 is spline-fitted onto the secondary sheave shaft 62 to rotate integrally with the secondary sheave shaft 62. A plurality of ring-shaped clutch plates 79 are mounted to the clutch housing 78. The clutch plates 79 are aligned at intervals axially of the secondary sheave shaft 62.

A cylindrical-shaped gear 80 is fitted rotatably around the left portion of the secondary sheave shaft 62 with two bearings 81 a, 81 b therebetween. The clutch boss 77 is arranged radially inwardly of the clutch plates 79 and radially outwardly of the gear 80 to mesh with the gear 80. Therefore, the gear 80 rotates together with the clutch boss 77. A plurality of ring-shaped friction plates 82 are mounted radially outwardly of the clutch boss 77. The friction plates 82 are aligned at intervals axially of the secondary sheave shaft 62, the respective friction plates 82 being arranged between adjacent clutch plates 79,79.

A plurality of cam surfaces 83a are formed on a left side of the clutch housing 78. Roller weights 84a are arranged between the cam surfaces 83a and the right-most clutch plate 79 opposed to the cam surfaces 83a.

The centrifugal clutch 41 is automatically switched between a clutch-in state (connected state) and a clutch-off state (disconnected state) according to the magnitude of a centrifugal force acting on the roller weights 84a.

That is, when a rotational speed of the clutch housing 78 becomes equal to or larger than a predetermined speed, the roller weights 84a are exerted by a centrifugal force to move radially outward, so that the clutch plates 79 are pushed leftward by the roller weights 84a. Consequently, the clutch plates 79 and the friction plates 82 are brought into pressure contact with each other to bring about the clutch-in state, in which a driving force of the secondary sheave shaft 62 is transmitted to an output shaft 85 through the gear 80 and the speed reducer 42.

On the other hand, when a rotational speed of the clutch housing 78 becomes less than the predetermined speed, a centrifugal force acting on the roller weights 84a decreases, so that the roller weights 84a move radially inward. Consequently, pressure contact between the clutch plates 79 and the friction plates 82 is released, so that the clutch-off state, in which a driving force of the secondary sheave shaft 62 is not transmitted to the output shaft 85 through the gear 80 and the speed reducer 42, is brought about. In addition, in Fig. 11, a front portion (an upper side in Fig. 11) in the centrifugal clutch 41 represents the clutch-off state and a rear portion (a lower side in Fig. 11) represents the clutch-in state.

The speed reducer 42 is interposed between the centrifugal clutch 41 and the output shaft 85. The speed reducer 42 includes a speed change shaft 100 arranged in parallel to the secondary sheave shaft 62 and the output shaft 85. The speed change shaft 100 is supported rotatably on the first case block 35a with a bearing 101 therebetween and supported rotatably on the second case block 35b with a bearing 102 therebetween. Provided on a right end of the speed change shaft 100 is a first speed change gear 103, which meshes with the gear 80.

Provided centrally on the speed change shaft 100 is a second speed change gear 104, which is smaller in diameter than the first speed change gear 103. Formed on an outer peripheral side of a right end of the output shaft 85 is a third speed change gear 105, which meshes with the second speed change gear 104. The inner peripheral side of the right end of the output shaft 85 is supported on a left end of the secondary sheave shaft 62 with a bearing 106 therebetween. Accordingly, the output shaft 85 is supported rotatably on the secondary sheave shaft 62 with the bearing 106 therebetween. Also, a central portion of the output shaft 85 is supported rotatably on the left end of the first case block 35a with a bearing 107 therebetween.

With such construction, the clutch boss 77 and the output shaft 85 are connected to each other through the gear 80, the first speed change gear 103, the speed change shaft 100, the second speed change gear 104, and the third speed change gear 105. Therefore, the output shaft 85 rotates upon rotation of the clutch boss 77.

A left end of the output shaft 85 extends through the first case block 35a to project outside the crankcase 35. A drive sprocket 108 is fixed to the left end of the output shaft 85. Wound around the drive sprocket 108 is a chain 109 that transmits a driving force of the output shaft 85 to the rear wheel 26. In addition, a mechanism, which transmits a driving force of the output shaft 85 to the rear wheel 26, is not limited to the chain 109 but may comprise other members such as a transmission belt, a gear mechanism composed of a combination of a plurality of gears, a drive shaft, etc.

As described above, with the CVT 30, the plurality of grooves 91 are formed on the sheave surfaces of the sheave halves 71 a, 71 b of the primary sheave 71 and the sheave halves 72a, 72b of the secondary sheave 72 to be aligned at predetermined pitch P(mm) in the radial direction and setting is made to meet P ≤ -0.08K×10⁻³ + 0.18 where K(Hv) indicates surface hardness of the sheave halves 71 a, 71 b, 72a, 72b. Thereby, it is possible to reduce a belt abrasion loss of the V-belt 73 while maintaining a lubricating ability between the respective sheaves 71, 72 and the V-belt 73. Accordingly, it is possible to achieve making the CVT 30 long in service life, thus enabling improving the CVT 30 in reliability.

The V-belt 73 can be further reduced in belt abrasion loss by meeting P ≤ 0.1 and K ≤ 1000, so that it is possible to further achieve making the CVT 30 long in service life.

However and according to the invention, by meeting 0.05 ≤ P ≤ 0.1 and 400 ≤ K ≤ 1000 and setting suitable lower limits for the groove pitch P and the surface hardness K, it is possible to make prevention of abrasion of the V-belt 73 and prevention of abrasion of the sheaves 71, 72 highly compatible with each other while maintaining a lubricating ability between the sheaves 71, 72 and the V-belt 73. In addition, by suppressing abrasion of the sheaves 71, 72, the grooves 91 on the sheave surfaces are made hard to be susceptible to aged deterioration and it is possible to maintain the lubricating ability of the V-belt 73 over a long term.

Also, according to the embodiment, the grooves 91 are formed by subjecting the sheave surfaces of the respective sheaves 71, 72 to turning process. Therefore, it is possible to realize the grooves 91 simply and inexpensively.

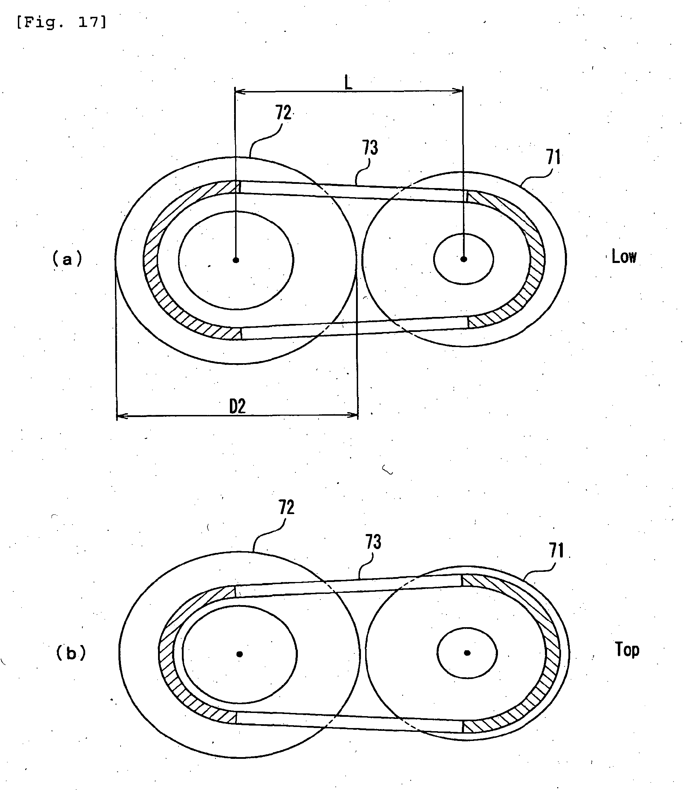

As shown in Figs. 17(a) and 17(b), with the CVT 30 according to the embodiment, a distance between the primary sheave 71 and the secondary sheave 72 is short as compared with magnitudes of the primary sheave 71 and the secondary sheave 72. Specifically, according to the embodiment, a distance L between an axis of the primary sheave 71 and an axis of the secondary sheave 72 is twice a diameter D2 of the secondary sheave 72 or less. Also, both the primary sheave 71 and the secondary sheave 72 are arranged between an axis of the front wheel 19 and an axis of the rear wheel 26 (see Fig. 5). Therefore, according to the embodiment, a ratio of that portion of the V-belt 73, which contacts with the sheave surfaces of the primary sheave 71 and the secondary sheave 72, to a whole thereof is large. Accordingly, the CVT 30 is constructed such that the V-belt 73 is originally liable to abrade since the V-belt 73 frequently goes in and out of the sheave grooves. Since it is possible according to the embodiment to suppress abrasion of the V-belt 73, there is not caused a problem especially even when a distance between the primary sheave 71 and the secondary sheave 72 is short.

### Modification of Groove Configuration :

The groove pitch P according to the embodiment is uniform. However, grooves on a sheave surface according to the present teaching are not necessarily uniform.

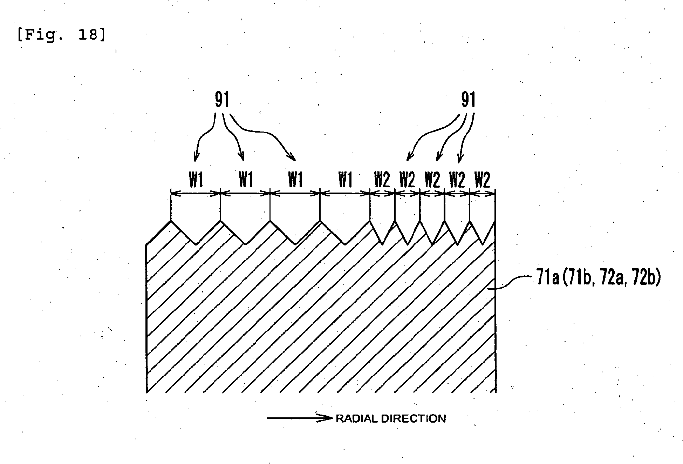

Grooves on a sheave surface according to the present teaching may be varied in groove pitch midway in a radial direction. For example, as shown in Fig. 18, groove pitch may change to W2 from W1 midway in a radial direction. Times, in which groove pitch changes in a radial direction, is not limited to one but may be twice or more. A manner, in which groove pitch changes, may be such that groove pitch decreases relatively outward from a center in a radial direction (see Fig. 18), or increases relatively. Also, after groove pitch decreases once as it goes in a radial direction, groove pitch may increase again, or vice versa.

In addition, in the case where groove pitch is not uniform, the effect described above can be obtained provided that an average groove pitch P meets the equation, that is, P ≤ - 0.08K×10⁻³ + 0.18. The average groove pitch can be defined by, for example, "radial length of that portion, on which grooves are formed,"/"number of grooves in a radial direction as viewed in a radial cross section".

However, a maximum groove pitch among several groove pitches preferably meets the equation. For example, while two groove pitches W1, W2 are present in an example shown in Fig. 18, a maximum groove pitch W1 among them preferably meets the equation W1 ≤ -0.08K×10⁻³+0.18.

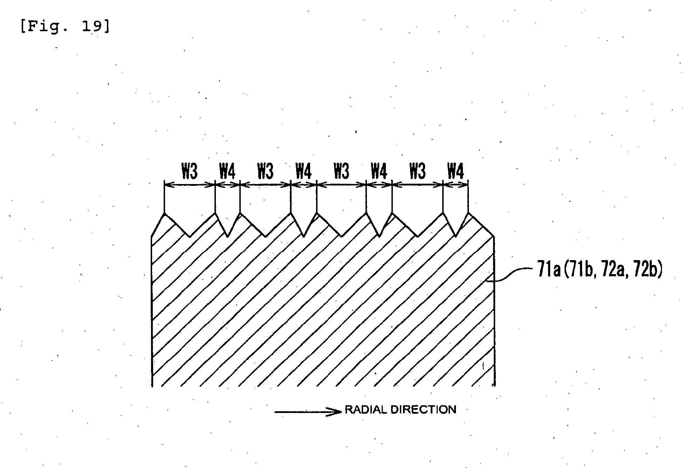

Also, as shown in Fig. 19, groove pitch may be changed alternately in a radial direction. Even in such case, the effect described above can be obtained provided that an average groove pitch meets the equation. In addition, in this example, a maximum groove pitch W3 among a plurality of groove pitches W3, W4 preferably meets the equation W3 ≤ -0.08K×10⁻³ + 0.18.

Also, groove pitch may be changed randomly in a radial direction. Even in such case, the effect described above can be obtained provided that an average groove pitch meets the equation.

In addition, groove pitch may be configured such that the embodiment and the modification are appropriately combined together. For example, groove pitch may be uniform in a predetermined range in a radial direction and groove pitch may be changed once or twice or more in other ranges. Alternatively, groove pitch may be uniform in a predetermined range in a radial direction and groove pitch may be changed alternately in other ranges. Also, groove pitch may be uniform in a predetermined range in a radial direction and groove pitch may be changed irregularly in other ranges. Groove pitch may be changed alternately in a predetermined range in a radial direction and groove pitch may be changed irregularly in other ranges. Also, groove pitch may be uniform in a predetermined range in a radial direction, groove pitch may be changed alternately in a further range, and groove pitch may be changed irregularly in a still further range.

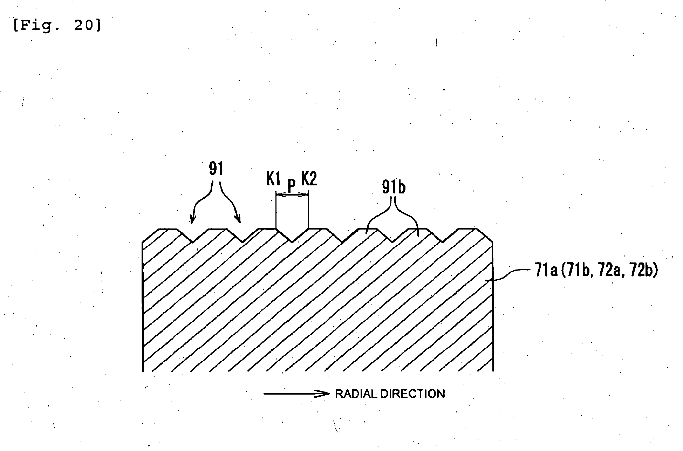

Also, while projections formed between grooves on a sheave surface project at acute angles in the embodiment and the modification, tip ends of the projections may be rounded. Also, as shown in Fig. 20, tip ends of projections 91 b may be flat. In the case where the tip ends of projections 91 b are flat, groove pitch P makes a distance between a position K1, in which one 91 b of both adjacent projections 91 b begins to descend, and a position K2, in which the other 91 b begins to descend. In addition, in the case where tip ends of projections are rounded, or in the case where tip ends of projections are flat, contact surface pressure on a V-belt is decreased as compared with the case where tip ends of projections are pointed, so that it is further preferable.

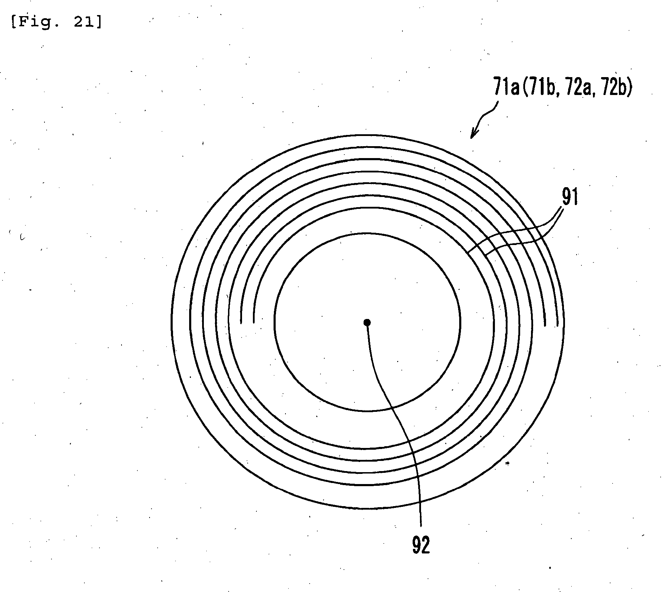

As described above, "a plurality of grooves aligned in a radial direction" in the present teaching means that a plurality of grooves are aligned in a cross section along a radial direction, and does not prescribe that the number of grooves is plural when a sheave surface is viewed from the front. Also, as described above, grooves on a sheave surface is not limited to the spiral-shaped grooves 91 (see Fig. 12(a)) but may comprise the concentric grooves 91 a (see Fig. 14(a)). Also, spiral-shaped grooves do not necessarily comprise a single continuous groove as viewed in front view but may comprise a plurality (two in an example shown in Fig. 21) of spiral-shaped grooves as viewed in front view.

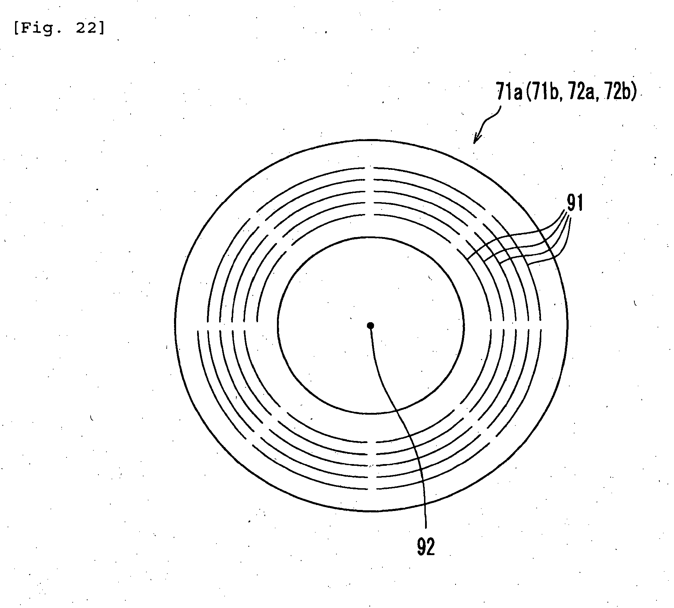

Also, grooves aligned in a radial direction and formed discretely in a circumferential direction as shown in Fig. 22 will do.

### Industrial Applicability:

As described above, the present teaching is useful in belt type continuously variable transmissions, straddle type vehicle provided therewith, and a method of manufacturing a sheave of a belt type continuously variable transmission.

The description above discloses (amongst others) that attention should be paid to the relationship between groove pitch and surface hardness of a sheave surface to reduce an abrasion loss of a V-belt.

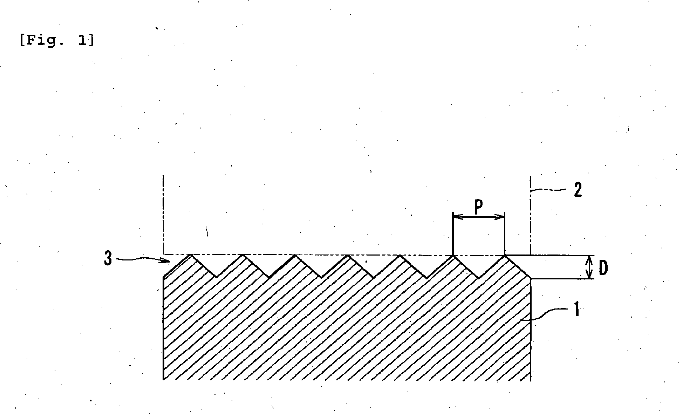

That is, as schematically shown in Fig. 1, in the case where a plurality of grooves 3 (In addition, "a plurality of grooves" referred to in the specification of the present application only means that a plurality of grooves are formed taking a cross section in a radial direction of a sheave into consideration, and includes the case where like, for example, a spiral groove, a plurality of grooves are continuous mutually to form a single groove as a whole.) aligned at a predetermined pitch P in a radial direction are formed on a sheave surface 1, dimensions of the grooves 3 are defined by depth D and pitch P. However, a parameter being surface roughness is dependent only on a depth D of the grooves 3 but irrelevant to pitch P. Therefore, it is thought that surface roughness alone cannot adequately define a magnitude of irregularities of the sheave surface 1.

In examining abrasion of a V-belt, pressure (referred below to as contact pressure) acted on the V-belt from a sheave surface is important. The larger contact pressure, the more liable to abrade a V-belt. Here, in the case where grooves 3 are formed on a sheave surface 1 (see Fig. 1), contact pressure is varied according to a pitch P of the grooves 3. That is, when the pitch P of the grooves 3 is small, a contact area between the sheave surface 1 and the V-belt 2 becomes large, so that contact pressure becomes relatively small. Conversely, when the pitch P of the grooves 3 is large, a contact area between the sheave surface 1 and the V-belt 2 becomes small, so that contact pressure becomes relatively large. In this manner, it is thought that contact pressure is seriously influenced by the pitch P of the grooves 3 rather than a depth D of the grooves 3 (influences of surface roughness).

From this viewpoint, the inventors of the present application have examined the relationship between groove pitch and surface hardness of a sheave surface and thought of the following embodiment of a belt type continuously variable transmission which comprises a primary sheave, a secondary sheave, and a V-belt wound round the primary sheave and the secondary sheave, at least a part of a contact portion thereof in contact with the primary sheave and the secondary sheave being formed from a resin, a plurality of grooves aligned in a radial direction of the sheaves as viewed in a cross section along the radial direction are formed on a sheave surface of at least one of the primary sheave and the secondary sheave, and the equations according to claim 1 are met.

Further, the description above discloses an embodiment of a method of manufacturing a sheave of a belt type continuously variable transmission, which is one which comprises a primary sheave, a secondary sheave, and a V-belt wound round the primary sheave and the secondary sheave, at least a part of a contact portion thereof in contact with the primary sheave and the secondary sheave being formed from a resin, the sheave being the primary sheave or the secondary sheave, the method comprising the steps of forming a plurality of grooves aligned on a sheave surface in a radial direction of the sheaves as viewed in a cross section along the radial direction, the grooves meeting the equations according to claim 10, and applying plating to that sheave surface, on which the grooves are formed.

According to these embodiments, it is possible in a belt type continuously variable transmission provided with a V-belt, that portion of which is in contact with a sheave surface, being formed from a resin to reduce abrasion loss of the V-belt, thus achieving making the belt type continuously variable transmission long in service life.

The description still further discloses, in order to suppress abrasion of a V-belt in a belt type continuously variable transmission to achieve a long service life, an embodiment of a belt type continuously variable transmission 30 which is accommodated in an engine unit 28 of a motorcycle. This belt type continuously variable transmission 30 comprises a primary sheave 71, a secondary sheave 72, and a V-belt 73, at least a part of that portion of which is in contact with the primary sheave 71 and the secondary sheave 72, being formed from a resin. A plurality of grooves aligned at predetermined pitch in a radial direction as viewed in cross section in a radial direction are formed on sheave surfaces of sheave halves 71a, 71 b of the primary sheave 71 and sheave halves 72a, 72b of the secondary sheave 72, and P ≤ -0.08K×10⁻³ + 0.18 is met where P(mm) indicates pitch of the grooves and K(Hv) indicates surface hardness of the sheave surfaces.

The description still further discloses an embodiment of a belt type continuously variable transmission comprising a primary sheave, a secondary sheave, and a V-belt wound round the primary sheave and the secondary sheave, at least a part of a contact portion thereof in contact with the primary sheave and the secondary sheave being formed from a resin, and wherein a plurality of grooves aligned in a radial direction of the sheaves as viewed in a cross section along the radial direction are formed on a sheave surface of at least one of the primary sheave and the secondary sheave, and the equations according to claim 1 are met.

Further, the grooves on the sheave surface may be formed by means of turning process.

Further, the grooves on the sheave surface may comprise a spiral groove or concentric grooves about an axis of the sheave.

Further, a material of that sheave, on which the grooves are formed, may be aluminum, stainless steel, or iron.

Further, a distance between an axis of the primary sheave and an axis of the secondary sheave may be twice a diameter of the secondary sheave or less.

Further, there is disclosed an embodiment of a straddle type vehicle comprising the belt type continuously variable transmission according to the above.

Therein, the straddle type vehicle may comprise a front wheel and a rear wheel, and wherein both the primary sheave and the secondary sheave may be arranged between an axis of the front wheel and an axis of the rear wheel in a longitudinal direction of the vehicle.

Further, there is disclosed an embodiment of a method of manufacturing a sheave of a belt type continuously variable transmission, which comprises a primary sheave, a secondary sheave, and a V-belt wound round the primary sheave and the secondary sheave, at least a part of a contact portion thereof in contact with the primary sheave and the secondary sheave being formed from a resin, the sheave being the primary sheave or the secondary sheave, the method comprising the steps of: forming a plurality of grooves aligned on a sheave surface in a radial direction of the sheaves as viewed in a cross section along the radial direction, the grooves meeting the equations according to claim 10, and applying plating to that sheave surface, on which the grooves are formed.

## Claims

1. Belt type continuously variable transmission comprising a primary sheave (71), a secondary sheave (72), and a V-belt (73) wound round the primary sheave (71) and the secondary sheave (72), wherein at least a part of a contact portion of the V-belt (73), which is in contact with the primary sheave (71) and the secondary sheave (72), is formed from a resin, wherein one groove or several grooves are formed on the contact surface of at least one of the primary sheave and the secondary sheave with the V-belt (73), to retain wear powder as a lubrication means,
**characterized in that**
the equations 0.05 mm ≤ P ≤ 0.1 mm and 400 Hv ≤ K ≤ 1000 Hv are met, wherein P indicates an average pitch of the groove or the grooves and K indicates a surface hardness of the sheave surface of the respective sheave, and
a ten-point mean roughness of the contact surface is 0.5 µm ≤ Rz ≤ 10 µm.

2. Belt type continuously variable transmission according to claim 1, **characterized by** one spiral groove or several spiral or concentric grooves formed about an axis of the respective sheave.

3. Belt type continuously variable transmission according to claim 1 or 2, **characterized in that** the pitch of the groove or the pitch of the grooves is uniform in a predetermined range in the radial direction.

4. Belt type continuously variable transmission according to claim 3, **characterized in that** the groove pitch is changed once or several times or alternately or irregularly in other ranges than the predetermined range in the radial direction than the predetermined range.

5. Belt type continuously variable transmission according to one of the claims 1 to 4, **characterized in that** the groove or the grooves on the sheave surface are formed by means of turning process.

6. Belt type continuously variable transmission according to one of the claims 1 to 5, **characterized in that** a material of that sheave, on which the groove or the grooves are formed, is aluminum, stainless steel, or iron.

7. Belt type continuously variable transmission according to one of the claims 1 to 6, **characterized in that** a distance between an axis of the primary sheave and an axis of the secondary sheave is not more than twice a diameter of the secondary sheave.

8. Straddle type vehicle comprising the belt type continuously variable transmission according to one of the claims 1 to 7.

9. Straddle type vehicle according to claim 8, **characterized by** a front wheel and a rear wheel, wherein both the primary sheave and the secondary sheave are arranged between an axis of the front wheel and an axis of the rear wheel in a longitudinal direction of the vehicle.

10. Method of manufacturing a primary sheave or a secondary sheave of a belt type continuously variable transmission, wherein a V-belt is wound round the primary sheave and the secondary sheave, and wherein at least a part of a contact portion of the V-belt in contact with the primary sheave and the secondary sheave is formed from a resin, the method comprising the steps of:
forming one groove or several grooves on the contact surface of at least one of the primary sheave and the secondary sheave with the V-belt (73), to retain wear powder as a lubrication means,
the equations 0.05 mm ≤ P ≤ 0.1 mm and 400 Hv ≤ K ≤ 1000 Hv are met, wherein P indicates an average pitch of the groove or the grooves and K indicates a surface hardness of the sheave surface of the respective sheave, and a ten-point mean roughness of the contact surface is 0.5 µm ≤ Rz ≤ 10 µm.

11. Method according to claim 10, the method comprising the further step of applying a plating to that sheave surface, on which the grooves are formed.

## Patentansprüche

1. Automatisches Riemengetriebe, das eine primäre Riemenscheibe (71), eine sekundäre Riemenscheibe (72) sowie einen Keilriemen (73) umfasst, der um die primäre Riemenscheibe (71) und die sekundäre Riemenscheibe (72) herum läuft, wobei wenigstens ein Teil eines Kontaktabschnitts des Keilriemens (73), der in Kontakt mit der primären Riemenscheibe (71) und der sekundären Riemenscheibe (72) ist, aus einem Kunststoff besteht, eine Nut oder mehrere Nuten an der Kontaktfläche der primären Riemenscheibe oder/und der sekundären Riemenscheibe mit dem Keilriemen (73) ausgebildet ist/sind, um durch Verschleiß entstehendes Pulver (wear powder) als ein Schmiermittel zurückzuhalten,
**dadurch gekennzeichnet, dass**
die Gleichungen 0,05 mm ≤ P ≤ 0,1 mm und 400 Hv ≤ K ≤ 1000 Hv gelten, wobei P eine mittlere Teilung der Nut bzw. der Nuten angibt und K eine Oberflächenhärte der Riemenscheiben-Oberfläche der jeweiligen Riemenscheibe angibt, und
eine gemittelte Zehnpunkte-Rautiefe der Kontaktfläche 0,5 µm ≤ Rz ≤ 10 µm ist.

2. Automatisches Riemengetriebe nach Anspruch 1, **dadurch gekennzeichnet, dass** eine spiralförmige Nut oder mehrere spiralförmige oder konzentrische Nuten um eine Achse der jeweiligen Riemenscheibe herum ausgebildet ist/sind.

3. Automatisches Riemengetriebe nach Anspruch 1 oder 2, **dadurch gekennzeichnet, dass** die Teilung der Nut bzw. die Teilung der Nuten in einem vorgegebenen Bereich in der radialen Richtung einheitlich ist.

4. Automatisches Riemengetriebe nach Anspruch 3, **dadurch gekennzeichnet, dass** die Teilung der Nut/en in anderen Bereichen als dem vorgegebenen Bereich in der radialen Richtung ein- oder mehrmals oder abwechselnd oder unregelmäßig geändert wird.

5. Automatisches Riemengetriebe nach einem der Ansprüche 1 bis 4, **dadurch gekennzeichnet, dass** die Nut oder die Nuten an der Riemenscheiben-Oberfläche mittels eines Drehverfahrens ausgebildet werden.

6. Automatisches Riemengetriebe nach einem der Ansprüche 1 bis 5, **dadurch gekennzeichnet, dass** ein Material derjenigen Riemenscheibe, an der die Nut bzw. die Nuten ausgebildet ist/sind, Aluminium, rostfreier Stahl oder Eisen ist.

7. Automatisches Riemengetriebe nach einem der Ansprüche 1 bis 6, **dadurch gekennzeichnet, dass** ein Abstand zwischen einer Achse der primären Riemenscheibe und einer Achse der sekundären Riemenscheibe nicht mehr als das Doppelte eines Durchmessers der sekundären Riemenscheibe beträgt.

8. Spreizsitz-Fahrzeug, das das automatische Riemengetriebe nach einem der Ansprüche 1 bis 7 umfasst.

9. Spreizsitz-Fahrzeug nach Anspruch 8, **gekennzeichnet durch** ein Vorderrad und ein Hinterrad, wobei sowohl die primäre Riemenscheibe als auch die sekundäre Riemenscheibe in einer Längsrichtung des Fahrzeugs zwischen einer Achse des Vorderrades und einer Achse des Hinterrades angeordnet sind.

10. Verfahren zum Herstellen einer primären Riemenscheibe oder einer sekundären Riemenscheibe eines automatischen Riemengetriebes, bei dem ein Keilriemen um die primäre Riemenscheibe und die sekundäre Riemenscheibe herum läuft und wenigstens ein Teil eines Kontaktabschnitts des Keilriemens, der in Kontakt mit der primären Riemenscheibe und der sekundären Riemenscheibe ist, aus einem Kunststoff besteht, wobei das Verfahren die folgenden Schritte umfasst:
Ausbilden einer Nut oder mehrerer Nuten an der Kontaktfläche der primären Riemenscheibe oder/und der sekundären Riemenscheibe mit dem Keilriemen (73), um durch Verschleiß entstehendes Pulver als ein Schmiermittel zurückzuhalten,
wobei die Gleichungen 0,05 mm ≤ P ≤ 0,1 mm und 400 Hv ≤ K ≤ 1000 Hv gelten, dabei P eine mittlere Teilung der Nut bzw. der Nuten angibt und K eine Oberflächenhärte der Riemenscheiben-Oberfläche der jeweiligen Riemenscheibe angibt, und
eine gemittelte Zehnpunkte-Rautiefe der Kontaktfläche 0,5 µm ≤ Rz ≤ 10 µm ist.

11. Verfahren nach Anspruch 10, wobei das Verfahren den weiteren Schritt des Aufbringens einer Plattierung auf die Riemenscheiben-Oberfläche umfasst, an der die Nuten ausgebildet werden.

## Revendications

1. Transmission variable continue de type courroie comprenant une poulie primaire (71) une poulie secondaire (72) et une courroie en V (73) enroulée autour de la poulie primaire (71) et de la poulie secondaire (72), dans laquelle au moins une fraction d'une partie formant contact de la courroie en V (73), qui est en contact avec la poulie primaire (71) et la poulie secondaire (72), est formée à partir d'une résine, une gorge ou plusieurs gorges étant formées sur la surface de contact et d'au moins l'une de la poulie primaire et de la poulie secondaire avec la courroie en V (73) afin de retenir la poudre due à l'usure comme moyen de lubrification,
**caractérisée en ce que**
les équations 0,05 mm ≤ P ≤ 0,1 mm
et 400 Hv ≤ Rz ≤ 1000 Hv sont satisfaites, P indiquant le pas moyen de la gorge ou des gorges et K indiquant la dureté de surface concernant la surface de poulie pour les poulies respectives, et
la rugosité moyenne en dix points de la surface de contact est 0,5 µm ≤ Rz ≤ 10 µm.

2. Transmission variable continue de type courroie selon la revendication 1, **caractérisée par** une gorge en spirale ou plusieurs gorges en spirale ou concentriques formées autour d'un axe de la poulie respective.

3. Transmission variable continue de type courroie selon la revendication 1 ou 2, **caractérisée en ce que** le pas de la gorge ou le pas des gorges est uniforme dans une plage prédéterminée dans la direction radiale.

4. Transmission variable continue de type courroie selon la revendication 3, **caractérisée en ce que** le pas des gorges est modifié une ou plusieurs fois ou bien alternativement ou encore irrégulièrement dans d'autres plages que la plage prédéterminée dans la direction radiale.

5. Transmission variable continue de type courroie selon l'une des revendications 1 à 4, **caractérisée en ce que** la gorge ou les gorges sur la surface de poulie sont formées au moyen d'un procédé de tournage.

6. Transmission variable continue de type courroie selon l'une des revendications 1 à 5, **caractérisée en ce que** le matériau de cette poulie, sur laquelle sont formées la poulie ou les poulies, est constitué d'aluminium, d'acier inoxydable, ou de fer.

7. Transmission variable continue de type courroie selon l'une des revendications 1 à 6, **caractérisée en ce que** la distance entre l'axe de la poulie primaire et l'axe de la poulie secondaire n'est pas supérieure à deux fois le diamètre de la poulie secondaire.

8. Véhicule à selle comprenant une transmission variable continue de type courroie conforme à l'une des revendications 1 à 7.

9. Véhicule à selle conforme à la revendication 8, **caractérisé par** une roue avant et une roue arrière, la poulie primaire et la poulie secondaire étant agencées toutes les deux entre l'axe de la roue avant et l'axe de la roue arrière dans la direction longitudinale du véhicule.

10. Procédé de fabrication d'une poulie primaire et d'une poulie secondaire appartenant à une transmission variable continue de type courroie, dans lequel une courroie en V est enroulée autour de la poulie primaire et de la poulie secondaire, et dans lequel au moins une fraction d'une partie en contact de la courroie en V en contact avec la poulie primaire et la poulie secondaire est formée à partir d'une résine, le procédé comprenant les étapes suivantes :
la formation d'une gorge ou de plusieurs gorges sur la surface de contact d'au moins l'une de la poulie primaire et de la poulie secondaire avec la courroie en V (73), afin de retenir la poudre due à l'usure comme moyen de lubrification,
les équations 0,05 mm ≤ P ≤ 0,1 mm
et 400 Hv ≤ Rz ≤ 1000 Hv sont satisfaites, P indiquant le pas moyen de la gorge ou des gorges et K indiquant la dureté de surface concernant la surface de poulie pour les poulies respectives, et la rugosité moyenne en dix points de la surface de contact est 0,5 µm ≤ Rz ≤ 10 µm.

11. Procédé selon la revendication 10, le procédé comprenant l'étape complémentaire d'application d'un placage sur cette surface de poulie sur laquelle sont formées les gorges.
